# FASCICULE DE BREVET EUROPEEN

(11) **EP 0 555 125 B1**
(45) Date de publication et mention de la délivrance du brevet: **02.08.1995**
(21) Numéro de dépôt: 93400203.1
(22) Date de dépôt: 28.01.1993
(51) Int. Cl.: B60R 7/02, B60R 13/02

(54) **Dispositif d'arrimage de charges sur le plancher d'un coffre de véhicule automobile**
Mittel zur Befestigung von Last am Boden eines Fahrzeugkofferraums
Load securing means for the floor of a vehicle boot

(30) Priorité: 04.02.1992 FR 9201525
(43) Date de publication de la demande: 11.08.1993
(73) Titulaire: AUTOMOBILES PEUGEOT, 75116 Paris (FR); AUTOMOBILES CITROEN, 92200 Neuilly-sur-Seine (FR)
(72) Inventeur: Moreau, Michel, F-28000 Chartres (FR)
(74) Mandataire: Gendraud, Pierre

(56) Documents cités:
- DE-A- 3 007 093
- DE-A- 3 837 408
- DE-U- 9 107 683
- US-A- 1 563 864
- US-A- 4 782 562

## Description

Pour arrimer des charges sur le plancher d'un coffre de véhicule automobile, il est connu de poser sur le fond des coffres des plaques portant des trous régulièrement répartis et pouvant recevoir des fiches destinées à caler des objets dans le coffre (voir, par exemple, le document DE-U-9 107 683 ou DE-A-3 837 408). Mais ces plaques sont encombrantes et peu pratiques.

On connaît également des anneaux d'arrimage pouvant être fixés par des vis sur le plancher du coffre. Mais ces dispositifs ne permettent pas de revêtir le coffre d'un matelas insonorisant et d'un tapis.

La présente invention a pour objet un dispositif d'arrimage qui pallie ces inconvénients.

Ce dispositif est caractérisé en ce qu'il comprend une coupelle qui est destinée à être placée dans des trous ménagés dans le matelas insonorisant et le tapis et qui présente un bord périphérique propre à maintenir le bord du tapis, un anneau d'arrimage logé à l'intérieur de la coupelle, des moyens pour assujetir l'anneau et la coupelle l'un à l'autre, et des moyens pour fixer l'anneau ou la coupelle au plancher.

On a décrit ci-après, à titre d'exemples non limitatifs deux modes de réalisation du dispositif d'arrimage selon l'invention avec référence aux dessins annexés dans lesquels :
La Figure 1 représente en perspective le plancher d'un coffre de véhicule muni de dispositifs d'arrimage selon l'invention;
La Figure 2 est une vue en plan d'un dispositif d'arrimage, dans un premier mode de réalisation
La Figure 2a est une vue en plan d'une variante du dispositif de la Figure 2 a;
Les Figures 3,3a en sont des coupes suivant III-III des Figures 2,2a;
La Figure 4 est une vue en plan d'un dispositif d'arrimage, dans un second mode de réalisation;
La Figure 5 en est une coupe suivant V-V de la Figure 4;
La Figure 6 en est une coupe suivant VI-VI de la Figure 4;
La Figure 7 est une vue de dessous du dispositif d'arrimage dans le second mode de réalisation.

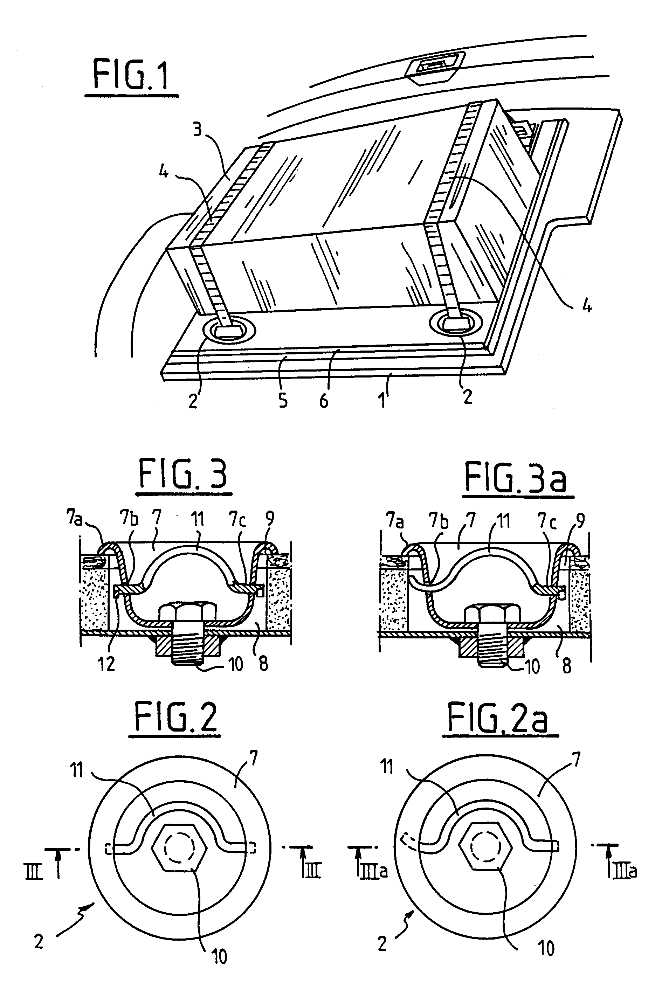

A la Figure 1, on voit le plancher 1 d'un coffre de véhicule automobile muni de quatre dispositifs d'arrimage qui sont désignés d'une façon générale par la référence 2 et permettent de maintenir une charge 3 au moyen de sangles 4. Le plancher 1 est recouvert d'un matelas insonorisant 5 lui-même recouvert d'un tapis 6.

Dans le mode de réalisation des Figures 2 et 3, le dispositif d'arrimage 2 comprend une coupelle métallique circulaire 7 qui est logée dans un trou 8 du matelas 5 auquel correspond un trou 9 du tapis 6; cette coupelle est fixée au plancher 1 par une vis 10. Elle est munie d'un bord roulé 7a qui recouvre le bord du trou 9 du tapis.

Le dispositif comprend également un anneau 11 sensiblement en U à fond arrondi dont les extrémités sont coaxiales et peuvent s'engager dans deux trous cylindriques diamétralement opposés 7b et 7c de la coupelle 7. Les extrémités de l'anneau ont été matricées comme indiqué en 12 après leur introduction dans les trous 7b et 7c. L'anneau ne peut ainsi plus se séparer de la coupelle et ne peut pivoter autour de l'axe des trous 7b et 7c qu'avec un certain effort.

En variante, l'une des extrémités de l'anneau 11 peut être matricée, son autre extrémité étant simplement courbée comme on le voit aux Figures 2a et 3a.
Après mise en place de l'anneau 11 dans la coupelle 7, on le fait pivoter pour permettre l'introduction de la vis, on introduit l'ensemble dans les trous 8 et 9, et on serre la vis 10.

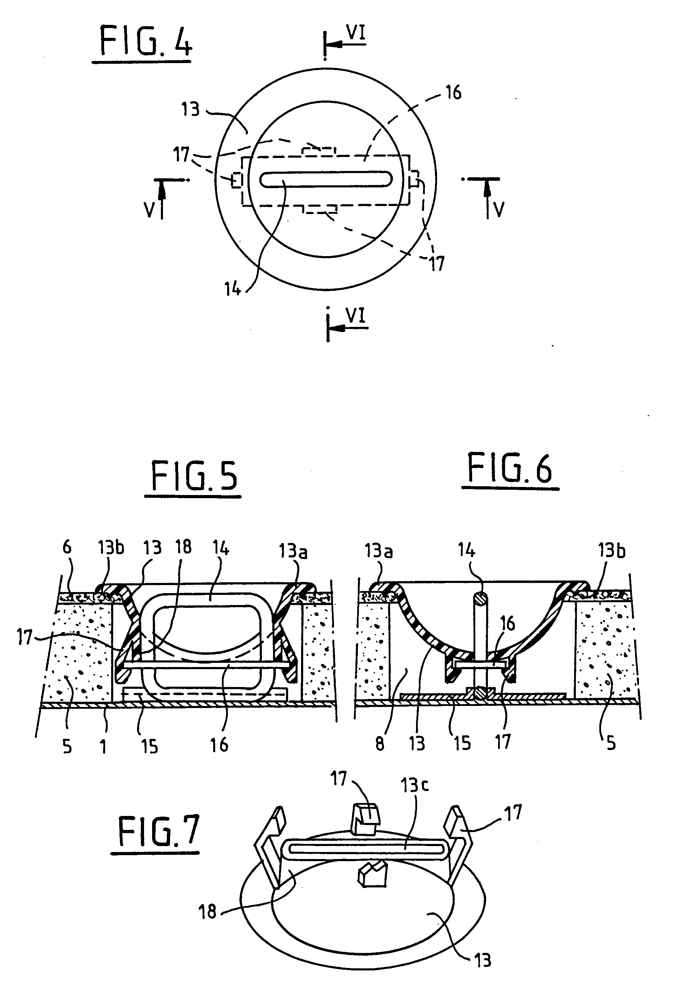

Dans le mode de réalisation des Figures 4 à 6, le dispositif comprend une coupelle en matière plastique 13 qui peut se loger dans les trous 8 et 9 et présente une collerette 13a dont la face interne est munie de picots 13b et qui peut venir reposer sur le bord du trou du tapis 6. Cette coupelle présente dans son fond une fente 13c permettant le passage d'un anneau 14; deux platines 15 sont soudées sur la base de cet anneau, de part et d'autre du plan de cet anneau.

L'anneau 14 traverse une ouverture d'une plaque rectangulaire 16 sur laquelle l'anneau est fixé. La coupelle 13 fait corps avec des crochets extérieurs 17. Ces crochets 17 au nombre, par exemple de quatre, sont répartis opposés deux à deux et peuvent venir s'engager derrière la plaque 16 en assurant la fixation de la coupelle sur l'anneau 14; elle comporte également un épaulement extérieur cylindrique 18, prolongeant la fente 13c. L'épaulement 18 qui rigidifie la coupelle 13, la guide sur l'anneau 14 et vient en butée sur la plaque 16.

On commence par souder les platines 15 sur le plancher 1, puis on met en place le matelas 5 et le tapis 6. Enfin on place la coupelle 13 de façon que l'anneau 14 s'introduise dans sa fente jusqu'à ce que la coupelle vienne en butée contre la plaque 16 et que les crochets 17 s'engagent derrière cette plaque.

## Revendications

1. Dispositif d'arrimage (2) d'une charge (3) sur le plancher (1) d'un coffre de véhicule automobile revêtu d'un matelas insonorisant (5) et d'un tapis (6),
caractérisé en ce qu'il comprend une coupelle (7 ou 13) qui est destinée à être placée dans des trous (8 et 9) ménagés dans le matelas insonorisant (5) et le tapis (6) et qui présente un bord périphérique (7a ou 13a) propre à maintenir le bord du tapis (6), un anneau d'arrimage (11 ou 14) logé à l'intérieur de la coupelle, des moyens pour assujetir l'anneau et la coupelle l'un à l'autre, et des moyens pour fixer l'anneau ou la coupelle au plancher (1).

2. Dispositif selon la revendication 1,
caractérisé en ce que la coupelle (7) est métallique et comporte un bord roulé (7a) qui recouvre le bord du trou (9) du tapis (6).

3. Dispositif selon la revendication 1 ou 2,
caractérisé en ce que la coupelle (7) est fixée par une vis (10) au plancher (1).

4. Dispositif selon l'une des revendications 1 à 3,
caractérisé en ce que l'anneau (11) présente deux extrémités coaxiales pouvant s'engager dans deux trous cylindriques diamétralement opposés (7b et 7c) de la coupelle (7).

5. Dispositif selon la revendication 4,
caractérisé en ce que l'anneau (11) a sensiblement la forme d'un U à fond arrondi.

6. Dispositif selon la revendication 4 ou 5,
caractérisé en ce que les extrémités de l'anneau (11) ont été matricées après leur introduction dans les trous (7b et 7c afin d'empêcher une désolidarisation de l'anneau tout en permettant son pivotement sous un certain effort.

7. Dispositif selon la revendication 4 ou 5,
caractérisé en ce que l'une des extrémités est courbe et l'autre a été matricée après leur introduction dans les trous (7b et 7c)afin d'empêcher une désolidarisation de l'anneau tout en permettant son pivotement sous un certain effort.

8. Dispositif selon la revendication 1,
caractérisé en ce que la coupelle (13) est en matière plastique et présente une collerette (13a) pouvant venir reposer sur le bord du trou du tapis (6).

9. Dispositif selon la revendication 8,
caractérisé en ce que la face interne de la collerette est munie de picots (13b).

10. Dispositif selon l'une des revendications 1,8 ou 9,
caractérisé en ce que deux platines (15) sont soudées à la base de l'anneau (14), de part et d'autre du plan de cet anneau.

11. Dispositif selon la revendication 10,
caractérisé en ce que la coupelle (13) comporte des crochets extérieurs (17) qui peuvent s'engager derrière un élément (16) solidaire de l'anneau.

12. Dispositif selon la revendication 11,
caractérisé en ce que l'élément (16) est constitué par une plaquette comportant une ouverture pour le passage de l'anneau (14).

13. Dispositif selon l'une des revendications 8 à 12,
caractérisé en ce que la coupelle (13) comporte un épaulement extérieur (18) la rigidifiant.

## Claims

1. A securing device (2) for a load (3) on the floor (1) of a motor vehicle boot lined with a sound-proofing mat (5) and a carpet (6),
characterised in that it comprises a cup (7 or 13) which is intended to be placed inside holes (8 and 9) contrived in the sound-proofing mat (5) and the carpet (6) and which has a peripheral rim (7a or 13a) suitable for holding the edge of the carpet (6), a securing ring (11 or 14) housed inside the cup, means for fastening the ring and the cup together, and means for fixing the ring or the cup to the floor (1).

2. A device according to Claim 1, characterised in that the cup (7) is metal and comprises a rolled rim (7a) that covers the edge of the hole (9) in the carpet (6).

3. A device according to Claim 1 or 2, characterised in that the cup (7) is fixed by a screw (10) to the floor (1).

4. A device according to one of Claims 1 to 3, characterised in that the ring (11) has two coaxial ends that can be engaged in two diametrically opposite cylindrical holes (7b and 7c) in the cup (7).

5. A device according to Claim 4, characterised in that the ring (11) is substantially U-shaped with a rounded base.

6. A device according to Claim 4 or 5, characterised in that the ends of the ring (11) have been stamped after being inserted into the holes (7b and 7c) in order to prevent the ring from becoming detached while allowing it to pivot under a certain effort.

7. A device according to Claim 4 or 5, characterised in that one of the ends is curved and the other has been stamped after their insertion into the holes (7b and 7c) in order to prevent the ring from becoming detached while allowing it to pivot under a certain effort.

8. A device according to Claim 1, characterised in that the cup (13) is made of a plastic material and has a flange (13a) that can rest on the edge of the hole in the carpet (6).

9. A device according to Claim 8, characterised in that the inner face of the flange is provided with spikes (13b).

10. A device according to one of Claims 1, 8 or 9, characterised in that two plates (15) are welded to the base of the ring (14), on either side of the plane of this ring.

11. A device according to Claim 10, characterised in that the cup (13) comprises outer hooks (17) that can be engaged behind an element (16) integral with the ring.

12. A device according to Claim 11, characterised in that the element (16) is constituted by an insert comprising an aperture for the ring (14) to pass through.

13. A device according to one of Claims 8 to 12, characterised in that the cup (13) comprises an outer shoulder (18) holding it rigid.

## Patentansprüche

1. Befestigungsvorrichtung (2) einer Last (3) auf dem Boden (1) eines Kofferraums eines Kraftfahrzeugs, der mit einer Schalldämmatte (5) und einem Teppich (6) bedeckt ist,
dadurch gekennzeichnet, daß sie eine Schale oder Kapsel (7 oder 13) aufweist, die dazu dient, in Löcher (8 und 9) gesetzt zu werden, die in der Schalldämmatte (5) und dem Teppich (6) ausgebildet sind, und die einen Umfangsrand (7a oder 13a), der in der Lage ist, den Rand des Teppichs (6) zu halten, einen Befestigungsring (11 oder 14), der im Inneren der Kapsel angeordnet ist, Einrichtungen zum guten Befestigen des Rings und der Kapsel aneinander, und Einrichtungen zum Befestigen des Rings oder der Kapsel am Boden (1) aufweist.

2. Vorrichtung nach Anspruch 1, dadurch gekennzeichnet, daß die Kapsel (7) metallisch ist und einen umgebogenen Rand (7a) aufweist, der den Rand des Loches (9) des Teppichs (6) bedeckt.

3. Vorrichtung nach Anspruch 1 oder 2, dadurch gekennzeichnet, daß die Kapsel (7) durch eine Schraube (10) am Boden (1) befestigt ist.

4. Vorrichtung nach einem der Ansprüche 1 bis 3, dadurch gekennzeichnet, daß der Ring (11) zwei koaxiale Enden aufweist, die in zwei zylindrische diametral entgegengesetzte Löcher (7b und 7c) der Kapsel (7) in Eingriff kommen können.

5. Vorrichtung nach Anspruch 4, dadurch gekennzeichnet, daß der Ring (11) im wesentlichen die Form eines U mit gerundetem Boden aufweist.

6. Vorrichtung nach Anspruch 4 oder 5, dadurch gekennzeichnet, daß die Enden des Rings (11) nach ihrem Einführen in die Löcher (7b und 7c) eingesenkt wurden, um ein Lösen des Rings zu verhindern unter Beibehaltung seiner Schwenkbarkeit unter einer gewissen Kraft.

7. Vorrichtung nach Anspruch 4 oder 5, dadurch gekennzeichnet, daß eines der Enden gekrümmt ist und das andere nach ihrem Einführen in die Löcher (7b und 7c) eingesenkt wurde, um ein Lösen des Rings zu verhindern unter Beibehaltung seiner Schwenkbarkeit unter einer gewissen Kraft.

8. Vorrichtung nach Anspruch 1, dadurch gekennzeichnet, daß die Kapsel (13) aus Kunststoff ist und einen Kragen (13a) aufweist, der in Anlage auf den Rand des Loches des Teppichs (6) kommen kann.

9. Vorrichtung nach Anspruch 8, dadurch gekennzeichnet, die Innenseite des Kragens mit Vorsprüngen oder Stacheln (13b) versehen ist.

10. Vorrichtung nach einem der Ansprüche 1, 8 oder 9, dadurch gekennzeichnet, daß zwei Platinen 15 an der Basis des Rings (14), beiderseits der Ebene dieses Ringes angeschweißt sind.

11. Vorrichtung nach Anspruch 10, dadurch gekennzeichnet, daß die Kapsel (13) Außenhaken aufweist, die in Eingriff hinter ein Element (16) kommen können, das mit dem Ring verbunden ist.

12. Vorrichtung nach Anspruch 11, dadurch gekennzeichnet, daß das Element (16) aus einer Platte gebildet wird, die eine Öffnung für den Hindurchtritt des Rings (14) aufweist.

13. Vorrichtung nach einem der Ansprüche 8 bis 12, dadurch gekennzeichnet, daß die Kapsel (13) eine äußere Schulter (18) aufweist, die sie verstärkt.
